# EUROPÄISCHE PATENTANMELDUNG

(11) **EP 4 361 458 A1**
(43) Veröffentlichungstag der Anmeldung: **01.05.2024**
(21) Anmeldenummer: 22203190.8
(22) Anmeldetag: 24.10.2022
(51) Int. Cl.: F16B 25/00

(54) **SCHRAUBE**

(71) Anmelder: SPAX International GmbH & Co. KG, 58256 Ennepetal (DE)
(72) Erfinder: LANGEWIESCHE, Frank, 45549 Sprockhövel (DE)
(74) Vertreter: Schneider, Sascha

(57) **Zusammenfassung**

Es wird eine Schraube (1), insbesondere Holzschraube vorgeschlagen, aufweisend ein unteres Gewinde (4) und ein oberes Gewinde (5), wobei das untere Gewinde (4) und das obere Gewinde (5) gegenläufig zueinander ausgebildet sind, wobei das untere Gewinde (4) unmittelbar in das obere Gewinde (5) übergeht.

## Beschreibung

Die Erfindung betrifft eine Schraube gemäß dem Patentanspruch 1.

Im Stand der Technik existieren Schrauben, insbesondere Holzschrauben, die beispielsweise bei der Verarbeitung von Spanplatten in der Möbelindustrie erfolgreich eingesetzt werden. Der Markt solcher Schrauben ist in den letzten Jahren stark gewachsen, wodurch auch die Einsatzgebiete zahlreicher geworden sind.

Beim Einsatz dieser Schrauben werden die unterschiedlichsten Hölzer verarbeitet. Je schwerer und härter das Holz ist, umso höhere Anforderungen sind an die verwendeten Schrauben zu stellen.

Schrauben für die holzverarbeitende Industrie müssen insbesondere immer höhere Anforderungen an die Stabilität erfüllen, da bei der Verwendung von immer härteren Hölzern die erzeugten Einschraubmomente immer größer werden.

Herkömmlicherweise versucht man, die Einschraubmomente dadurch zu verringern, dass die verwendeten Hölzer vorgebohrt werden müssen. Dieses Vorbohren ist dabei nicht nur bei der Verschraubung von ungehärteten Edelstahlschrauben notwendig, sondern mittlerweile auch bei gehärteten Schrauben erforderlich.

Allerdings hat sich herausgestellt, dass das Vorbohren der Hölzer relativ aufwendig ist, zusätzliche Arbeitsgänge erfordert und relativ hohe Kosten verursacht.

Es ist daher die Aufgabe der vorliegenden Erfindung, die Nachteile des Stands der Technik zu beseitigen und insbesondere eine Schraube zur Verfügung zu stellen, die beim Einschrauben geringe Einschraubmomente verursacht.

Gelöst wird diese Aufgabe mit dem Gegenstand der unabhängigen Ansprüche. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. In den angegebenen Wertebereichen sollen auch innerhalb der genannten Grenzen liegende Werte als Grenzwerte offenbart und in beliebiger Kombination beanspruchbar sein.

Die vorliegende Erfindung betrifft eine Schraube, insbesondere Holzschraube, aufweisend ein unteres Gewinde und ein oberes Gewinde, wobei das untere Gewinde und das obere Gewinde gegenläufig zueinander ausgebildet sind, wobei das untere Gewinde unmittelbar in das obere Gewinde übergeht.

Dadurch, dass das untere Gewinde unmittelbar in das obere Gewinde übergeht, ist es vorteilhaft möglich, dass das erzeugte Einschraubmoment wesentlich verringert werden kann.

Vorteilhaft ist es weiterhin möglich, dass selbst bei verwendeten harten Hölzern keine Vorbohrung im Holz mehr erforderlich ist.

Weiterhin können bei der erfindungsgemäßen Schraube relativ geringe Querschnitte und auch nicht gehärtete Materialien, zum Beispiel Edelstahl, verwendet werden.

Außerdem kann das Verhältnis vom Bruchdrehmoment der Schraube zum maximalen Einschraubmoment wesentlich verbessert werden, was zum Beispiel für erforderliche Zulassungen sehr relevant ist.

Die Vorteile der Erfindung werden insbesondere dadurch erzielt, dass die erzeugten Einschraubmomente reduziert werden, weil insbesondere die Reibung beim Einschrauben der Schraube in das Holz reduziert wird.

Dieses wird dadurch erreicht, dass das untere Gewinde unmittelbar in das obere Gewinde übergeht.

Weiterhin ist es vorteilhaft erfindungsgemäß möglich, dass die Bohrung aufgeweitet wird und dadurch mehr Platz für einen weiteren Schaftdurchmesser im Holz geschaffen wird und die Reibung gesenkt werden kann. Ein zusätzlicher Effekt kann erreicht werden dadurch, dass hochstehende Späne und Aufwürfe um das Einschraubloch reduziert werden können.

In einer bevorzugten Ausführungsform der vorliegenden Erfindung ist vorgesehen, dass ein Kerndurchmesser des oberen Gewindes größer als oder zumindest gleich groß wie ein Kerndurchmesser des unteren Gewindes ist.. Dadurch ist vorteilhaft gewährleistet, dass es nicht zu einer Schwächung der Schraube an dieser Stelle kommt. Der Querschnitt an dieser Stelle ist für die Stabilität der Schraube besonders wichtig.

In einer anderen bevorzugten Ausführungsform der Erfindung ist vorgesehen, dass das untere Gewinde rechtsläufig und das obere Gewinde linksläufig ist. Durch diese Ausführung wird vorteilhaft Platz im Holz geschaffen und die Reibung kann gesenkt werden. Bei dieser Ausführung hat sich besonders herausgestellt, dass hochstehende Späne und Aufwürfe um das Einschraubloch reduziert werden können.

In einer anderen vorteilhaften Ausführungsform der Erfindung ist vorgesehen, dass ein Außendurchmesser des oberen Gewindes kleiner als ein Außendurchmesser des unteren Gewindes ist. Dadurch ist es vorteilhaft möglich, die Reibung im Bereich des oberen Gewindes zu reduzieren.

In einer anderen bevorzugten Ausführungsform der Erfindung ist vorteilhaft vorgesehen, dass eine Steigung des oberen Gewindes das 0,8-Fache bis 2-Fache einer Steigung des unteren Gewindes beträgt. Dadurch ist es vorteilhaft möglich, die Reibung beim Einschrauben der Schraube wesentlich zu verringern.

In einer anderen bevorzugten Ausführungsform der vorliegenden Erfindung ist vorgesehen, dass zwischen dem oberen Gewinde und einem Kopf der Schraube ein Bereich mit einem Durchmesser angeordnet ist, wobei der Durchmesser größer ist als ein Kerndurchmesser des oberen Gewindes und ein Kerndurchmesser des unteren Gewindes. Erfindungsgemäß ist es vorteilhaft möglich, dass die Reibung in diesem Bereich reduziert werden kann.

In einer anderen bevorzugten Ausführungsform der vorliegenden Erfindung ist vorgesehen, dass sich das untere Gewinde bis in eine Spitze der Schraube erstreckt. Dadurch ist es vorteilhaft möglich, dass beim Einschrauben der Schraube das Einschraubmoment kontinuierlich gesteigert werden kann und ruckartige Anstiege vermieden werden können.

In einer anderen bevorzugten Ausführungsform ist es vorgesehen, dass das untere Gewinde in einer Längsrichtung der Schraube gesehen mehr als doppelt so lang ist wie das obere Gewinde. Dadurch ist es vorteilhaft möglich, dass das untere Gewinde als sogenanntes Hauptgewinde verwendet werden kann, so dass das untere Gewinde aufgrund seiner Länge die erforderliche Festigkeit im Bohrloch erzeugen kann.

Die erfindungsgemäße Schraube erstreckt sich entlang einer Längsachse und weist im oberen Teil, in dem sich das obere Gewinde befindet, am obersten Ende einen Kopf auf, wobei am Kopf ein Kraftangriff für ein Betätigungswerkzeug angeordnet ist.

Die Schraube erstreckt sich entlang der Längsachse vom Kopf im oberen Bereich bis zu einer Spitze im unteren Bereich, wobei sich das untere Gewinde im Bereich der Spitze befindet.

Die Merkmale "unteres Gewinde" und "oberes Gewinde" sind also so zu verstehen, dass der obere Bereich sich im Bereich des Kopfes befindet und dass sich der untere Bereich im Bereich der Spitze befindet.

Das untere Gewinde und das obere Gewinde sind erfindungsgemäß gegenläufig zueinander ausgebildet. Grundsätzlich ist es möglich, dass das untere Gewinde als Rechtsgewinde ausgebildet ist und das obere Gewinde als Linksgewinde ausgebildet ist; andererseits ist es auch möglich, dass das untere Gewinde als Linksgewinde und das obere Gewinde als Rechtsgewinde ausgebildet ist.

Weiterhin ist erfindungsgemäß vorgesehen, dass das untere Gewinde unmittelbar in das obere Gewinde übergeht. Dieses bedeutet insbesondere, dass sich zwischen dem unteren Gewinde und dem oberen Gewinde kein Bereich befindet, in dem die Schraube frei von einem Gewinde ist.

Der unmittelbare Übergang umfasst insbesondere auch, dass fertigungsbedingte Aufwürfe zwischen dem oberen Gewinde und dem unteren Gewinde vorhanden sind, die beispielsweise in Längsrichtung der Schraube gesehen eine Erstreckung von bis zu 2 mm haben können.

Es kann weiterhin beispielsweise vorgesehen sein, dass sich zwischen dem unteren Gewinde und dem oberen Gewinde eine Fase befindet und dass an dieser Fase das untere Gewinde in das obere Gewinde übergeht.

Weitere Vorteile, Merkmale und Einzelheiten der Erfindung ergeben sich aus der nachfolgenden Beschreibung eines bevorzugten Ausführungsbeispiels sowie anhand der Zeichnungen. Diese zeigen in schematischer Ansicht:
Figur 1 zeigt schematisch eine Seitenansicht einer erfindungsgemäßen Schraube und
Figur 2 zeigt schematisch einen Ausschnitt der erfindungsgemäßen Schraube aus Figur 1.

In den Figuren sind Vorteile und Merkmale der Erfindung mit diese jeweils identifizierenden Bezugszeichen gemäß Ausführungsformen der Erfindung gekennzeichnet, wobei Bauteile beziehungsweise Merkmale mit gleicher oder gleichwirkender Funktion mit identischen Bezugszeichen gekennzeichnet sind.

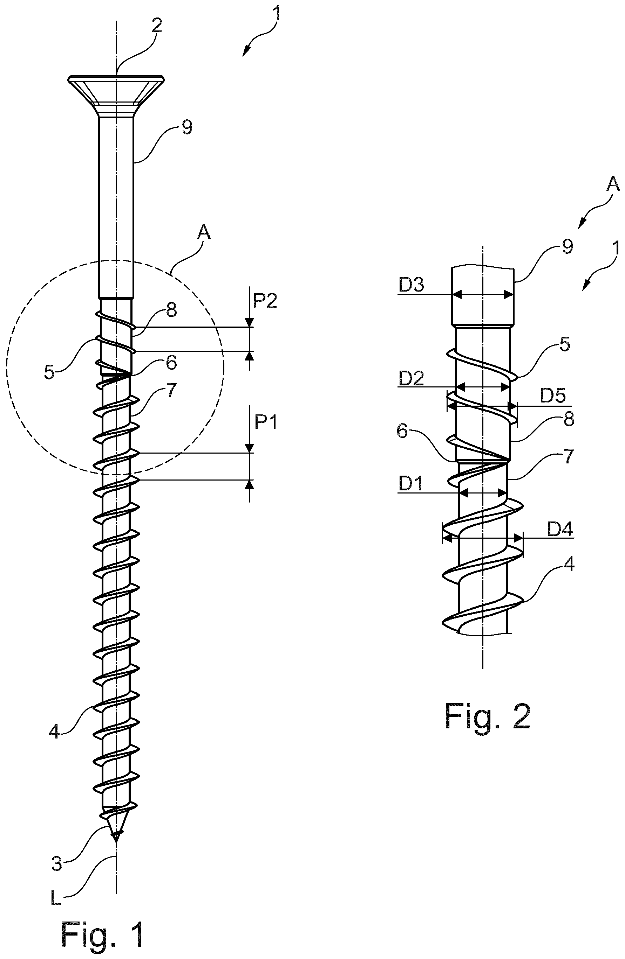

Figur 1 zeigt eine Schraube 1 gemäß einer beispielhaften bevorzugten Ausführungsform der vorliegenden Erfindung.

Die Schraube 1 weist auf einen Kopf 2 mit einem Kraftangriff für ein Betätigungswerkzeug.

Die Schraube 1 erstreckt sich entlang einer Längsachse L vom Kopf 2 bis hin zu einer Spitze 3.

Es wird definiert, dass sich der Kopf 2 im oberen Bereich der Schraube 1 befindet und dass sich die Spitze 3 im unteren Bereich der Schraube 1 befindet.

Vom Kopf 2 in Richtung der Längsachse L gesehen erstreckt sich ein Bereich 9, wobei der Bereich 9 einen Durchmesser D3 aufweist.

Weiter in Längsachse L in Richtung Spitze 3 gesehen schließt sich an den Bereich 9 ein Bereich 8 an, wobei die Schraube im Bereich 8 einen Durchmesser D2 aufweist.

Im Bereich 8 weist die Schraube 1 ein oberes Gewinde 5 auf, welches in diesem Beispiel ein linksgerichtetes Gewinde ist.

Das obere Gewinde 5 weist einen Gewindeaußendurchmesser D5 auf.

Der Durchmesser D3 der Schraube im Bereich 9 wird auch als sogenannter Schaftdurchmesser zwischen dem oberen Gewindebereich 8 und dem Kopf 2 bezeichnet.

Der Durchmesser D2 wird auch als Kerndurchmesser des oberen Gewindes 5 bezeichnet.

Weiterhin weist die Schraube 1 entlang der Längsachse in Richtung der Spitze 3 gesehen vor dem Bereich 8 mit dem oberen Gewinde 5 einen Bereich 7 auf, in dem ein unteres Gewinde 4 mit einem rechtsgerichteten Gewinde angeordnet ist. Im Bereich 7 weist die Schraube einen Kerndurchmesser D1 des unteren Gewindes 4 auf.

Das untere Gewinde 4 weist einen Gewindeaußendurchmesser D4 auf.

Zwischen dem Bereich 8 mit dem oberen Gewinde 5 und dem Bereich 7 mit dem unteren Gewinde 4 ist in diesem Ausführungsbeispiel eine Fase 6 angeordnet.

Erfindungsgemäß geht das untere Gewinde 4 unmittelbar in das obere Gewinde 5 über, das bedeutet, dass es zwischen dem unteren Gewinde 4 und dem oberen Gewinde 5 keinen gewindefreien Bereich gibt. Die Fase 6 formt den Übergang vom Bereich 7 in den Bereich 8, der Durchmesser D1 des unteren Gewindes 4 ist kleiner als der Durchmesser D2 des Gewindes 5.

Weiterhin ist es in dieser Ausführungsform derart, dass der Schaftdurchmesser D3 im Bereich 9 der Schraube 1 größer ist als der Kerndurchmesser D1 des unteren Gewindes 4 und der Kerndurchmesser D2 des oberen Gewindes 5,

Weiterhin weist das obere Gewinde 5 eine Steigung P2 auf, wobei die Steigung P2 den Abstand der Gewindegänge des oberen Gewindes 5 bezeichnet.

Analog dazu weist das untere Gewinde 4 eine Steigung P1 auf, wobei diese den Abstand der Gewindegänge des unteren Gewindes 4 bezeichnet.

In diesem Ausführungsbeispiel ist es so, dass die Steigung P2 des oberen Gewindes 5 das 0,8-Fache der Steigung P1 des unteren Gewindes 4 beträgt.

Die Länge des unteren Gewindes 4 ist wesentlich größer als die Länge des oberen Gewindes 5. In diesem Beispiel ist die Länge des unteren Gewindes 4 mehr als viermal so groß wie die Länge des oberen Gewindes 5.

Die Länge des Bereiches 9 des Schaftes zwischen dem oberen Gewinde 5 und dem Kopf 2 ist in diesem Ausführungsbeispiel mehr als doppelt so groß wie die Länge des Bereiches mit dem oberen Gewinde 5.

Figur 2 bezeichnet den Ausschnitt A, der die Details der Figur 1 vergrößert darstellt. In dieser Zeichnung wird besonders deutlich, dass das untere Gewinde 4 an der Fase 6 direkt und unmittelbar in das obere Gewinde 5 übergeht und erfindungsgemäß kein Bereich ohne Gewinde zwischen dem oberen Gewinde 5 und dem unteren Gewinde 4 vorhanden ist.

Das oben beschriebene Ausführungsbeispiel dient lediglich der Illustration der Idee der Erfindung. Dieses Ausführungsbeispiel soll den Gegenstand der Erfindung in keinem Falle einschränken.

### Bezugszeichenliste

- 1: Schraube
- 2: Kopf
- 3: Spitze
- 4, 5: Gewinde
- 6: Fase
- 7, 8, 9: Bereich

- A: Ausschnitt
- D1, D2, D3, D4, D5: Durchmesser
- L: Längsachse
- P1, P2: Steigung

## Patentansprüche

1. Schraube (1), insbesondere Holzschraube, aufweisend ein unteres Gewinde (4) und ein oberes Gewinde (5), wobei das untere Gewinde (4) und das obere Gewinde (5) gegenläufig zueinander ausgebildet sind, **dadurch gekennzeichnet, dass** das untere Gewinde (4) unmittelbar in das obere Gewinde (5) übergeht.

2. Schraube (1) nach Anspruch 1, wobei ein Kerndurchmesser (D2) des oberen Gewindes (5) größer als oder zumindest gleich groß ist wie ein Kerndurchmesser (D1) des unteren Gewindes (4) ist.

3. Schraube (1) nach mindestens einem der vorhergehenden Ansprüche, wobei das untere Gewinde (4) rechtsläufig und das obere Gewinde (5) linksläufig ist.

4. Schraube (1) nach mindestens einem der vorhergehenden Ansprüche, wobei ein Außendurchmesser (D5) des oberen Gewindes (5) kleiner als ein Außendurchmesser (D4) des unteren Gewindes (4) ist.

5. Schraube (1) nach mindestens einem der vorhergehenden Ansprüche, wobei eine Steigung (P2) des oberen Gewindes (5) das 0,8-fache bis 2-fache einer Steigung (P1) des unteren Gewindes (4) beträgt.

6. Schraube (1) nach mindestens einem der vorhergehenden Ansprüche, wobei zwischen dem oberen Gewinde (5) und einem Kopf (2) der Schraube (1) ein Bereich (9) mit einem Durchmesser (D3) angeordnet ist, wobei der Durchmesser (D3) größer ist als ein Kerndurchmesser (D2) des oberen Gewindes (5) und ein Kerndurchmesser (D1) des unteren Gewindes (4).

7. Schraube (1) nach mindestens einem der vorhergehenden Ansprüche, wobei sich das untere Gewinde (4) bis in eine Spitze (3) der Schraube (1) erstreckt.

8. Schraube (1) nach mindestens einem der vorhergehenden Ansprüche, wobei das untere Gewinde (4) in einer Längsrichtung (L) der Schraube (1) gesehen mehr als doppelt so lang ist wie das obere Gewinde (5).
